# EUROPEAN PATENT SPECIFICATION

(11) **EP 1 495 553 B1**
(45) Date of publication and mention of the grant of the patent: **14.04.2010**
(21) Application number: 04715536.1
(22) Date of filing: 27.02.2004
(51) Int. Cl.: H04B 1/707

(54) **Apparatus and method for detecting transmitted radio signal**
Vorrichtung und Verfahren zur Erfassung eines übertragenen Funksignals
Appareil et procédé pour detecter un signal radio transmis

(30) Priority: 01.03.2003 US 376686
(43) Date of publication of application: 12.01.2005
(73) Proprietor: MITSUBISHI DENKI KABUSHIKI KAISHA, Chiyoda-ku Tokyo 100-8310 (JP)
(72) Inventor: MOLISCH, Andreas, North Plainfield, NJ 07060 (US); VANNUCCI, Giovanni, Red Bank, NJ 07701 (US); ZHANG, Jinyun, Cambridge MA 02141 (US)
(74) Representative: Pfenning, Meinig & Partner GbR
(86) International application number: PCT/JP2004/002453
(87) International publication number: WO 2004/079940

(56) References cited:
- WO-A-01/93441
- US-B1- 6 301 294
- CHOI J D ET AL: "PERFORMANCE OF ULTRA-WIDEBAND COMMUNICATIONS WITH SUBOPTIMAL RECEIVERS IN MULTIPATH CHANNELS" IEEE JOURNAL ON SELECTED AREAS IN COMMUNICATIONS, IEEE INC. NEW YORK, US, vol. 20, no. 9, December 2002 (2002-12), pages 1754-1766, XP001046263 ISSN: 0733-8716

## Description

### Technical Field

The present invention relates generally to the field of wireless radio communications, and more specifically to rake receivers for ultra wide bandwidth radio systems.

### Background Art

Ultra wide bandwidth (UWB) is a form of spread-spectrum radio communication. In UWB systems, the bandwidth is much wider than the bandwidth of the underlying payload or data signal. However, unlike a conventional spread-spectrum system, where the signal is, more or less, of constant amplitude, a UWB signal consists of a sequence of very short pulses spread over a very wide frequency range. Therefore, the terms "UWB" and "impulse radio" are often used synonymously. The spreading waveform is a pattern of short pulses that is modulated to encode the data.

Many spread-spectrum communication systems employ so-called "rake" receivers to compensate for multi-path propagation.

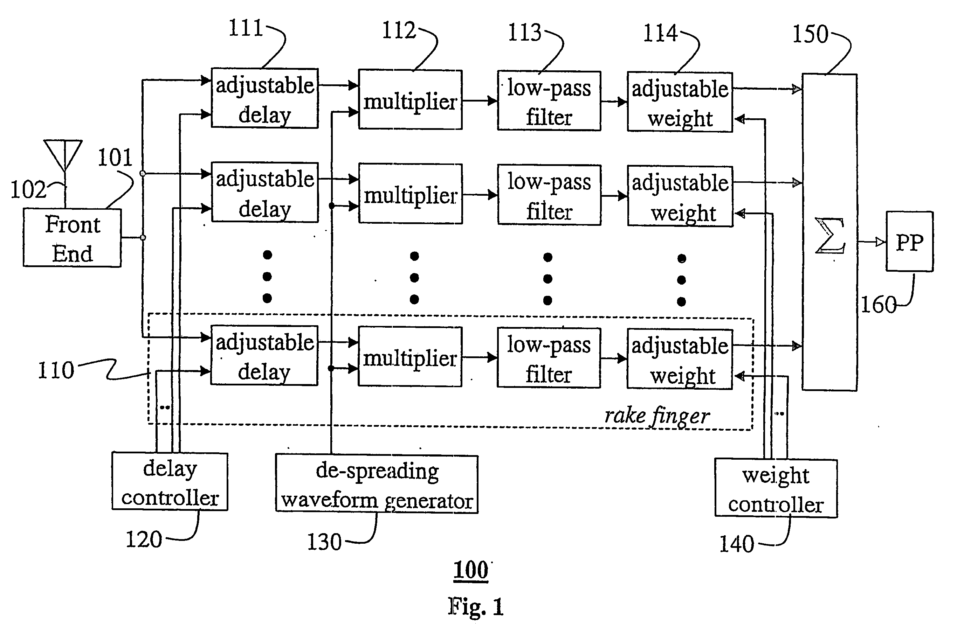

Figure 1 shows a rake receiver 100 according to the prior art. The rake receiver includes a front end 101 for pre-processing a radio signal 102. The rake receiver has a modular structure wherein the received radio signal 102 is processed in parallel through multiple rake fingers 110. Each rake finger 110 processes the signal that is received through one of the paths of propagation in a multi-path radio channel.

Accordingly, each finger includes an adjustable delay block 111 controlled by a delay controller 120, and an adjustable weight block 114 controlled by a weight controller 140 for signal gain. The delayed received signal is multiplied 112 by a de-spreading waveform output from a de-spreading waveform generator 130, low-pass filtered 113, before the signals are scaled or weighted 114.

The delay and weight gain compensate respectively for delay and attenuation of the corresponding path. Each finger extracts the corresponding path signal by "de-spreading" the received signal through the multiplication 112 by a replica of the spreading waveform that was used in the transmitter. The outputs of the fingers 110 are then combined in a summing block 150 before post-processing (PP) 160. The summing can be an algebraic sum.

More specifically, processing is usually performed on a complex representation of the received signal 102, whereby each signal corresponds to a complex waveform consisting of a real and imaginarypart, also known as in-phase and quadraturecomponents. The weight of each rake finger 110 is set to match the *complex* conjugate of the complex amplitude of the corresponding path.

When the outputs of the fingers are combined in the summing block Σ 150, they are simply added together. This method of weighting and combining multiple signals is known as "maximal-ratio" combining. Alternative methods for the choice of the finger weights include "equal gain" weight assignment and "optimum" weight generation.

Figure 36 in the document WO0193441 discloses an "ULTRA WIDE BANDWIDTH SPREAD-SPECTRUM COMMUNICATIONS METHOD AND SYSTEM".

One problem with a conventional rake receiver is that the adjustable delay blocks 111 are difficult to implement for a UWB signal.

Due to the ultra wide bandwidth, UWB systems have a very fine temporal resolution, and are thus capable of resolvingmulti-path components that are spaced at an inverse of the bandwidth. This is usually seen as a big advantage of UWB. Multi-path resolution of components reduces signal fading because the multi-path components are different diversity paths. The probability that the components are simultaneously all in a deep fade is very low.

However, the fine time resolution also means that many of the multi-path components (MPC) have to be "collected" by the rake receiver 100 in order obtain all of the available energy. A channel with *Nₚ* resolvable components requires *Nₚ* fingers to collect all of the available energy. In a dense multi-path environment, the number of MPC increases linearly with the bandwidth. For example, a UWB system with a 10 GHz bandwidth, operating in an environment with 100 ns maximum excess delay requires 1000 fingers. Even a sparse environment, such as specified by the IEEE 802.15.3a standard channel model, requires up to 80 fingers to collect 80% of the available energy.

Another problem is the complexity of the rake fingers 110. In the conventional rake finger of a direct-sequence-spread spectrum (DS-SS) system, the output of the correlator is determined once per symbol. In order to do the correlation, the signal first has to be sampled and analog-to-digital (A/D) converted at the chip rate, which is the inversion of the spreading bandwidth. Then, those samples have to be processed. This involves convolution with the stored reference waveform, addition, and readout. Sampling and A/D converting at the chip rate, e.g., 10GHz, requires expensive components.

The goal of UWB is to enable low cost and ultra high data rate applications. To make UWB feasible for these types of applications an improved rake receiver that overcomes the above problems is desired.

The invention is disclosed according to the independent claims.

The subject-matter disclosed below in the description and going beyond the scope of the claims has to be considered as examples and not embodiments even if the words like "embodiment", "invention", "spirit", or the like are used in said description.

### Disclosure of Invention

The invention provides a rake receiver for ultra wide bandwidth (UWB) communications systems. After processing a received UWB radio signal in a front-end, the UWB signal is passed in parallel through multiple rake fingers.

The number of fingers is based on the number of "significant" paths in a transmission channel, as well as cost considerations.

Each finger includes a programmable pulse generator, a multiplier, a low-pass filter, and an adjustable weight serially connected, perhaps in an arbitrary order. The programmable pulse generator generates a pulse waveform with a delay corresponding to a delay of a particular path in the multi-path channel.

The pulse waveform is multiplied with the received signal in the analog domain, and sampled and A/D converted at the symbol rate. The output signal is then low-pass filtered and gain controlled with an adjusted weight. Finally, the outputs from all of the fingers are combined by summation to recover the transmitted signal.

### Brief Description of Drawings

Figure 1 is a block diagram of a prior art rake receiver for a spread-spectrum ultra wide bandwidth communication system;
Figure 2 is a block diagram of a rake receiver according to the invention;
Figure 3 is block diagram of an alternative embodiment of the rake receiver according to the invention; and
Figure 4 is a block diagram of yet another alternative embodiment of the rake receiver according to the invention.

### Best Mode for Carrying Out the Invention

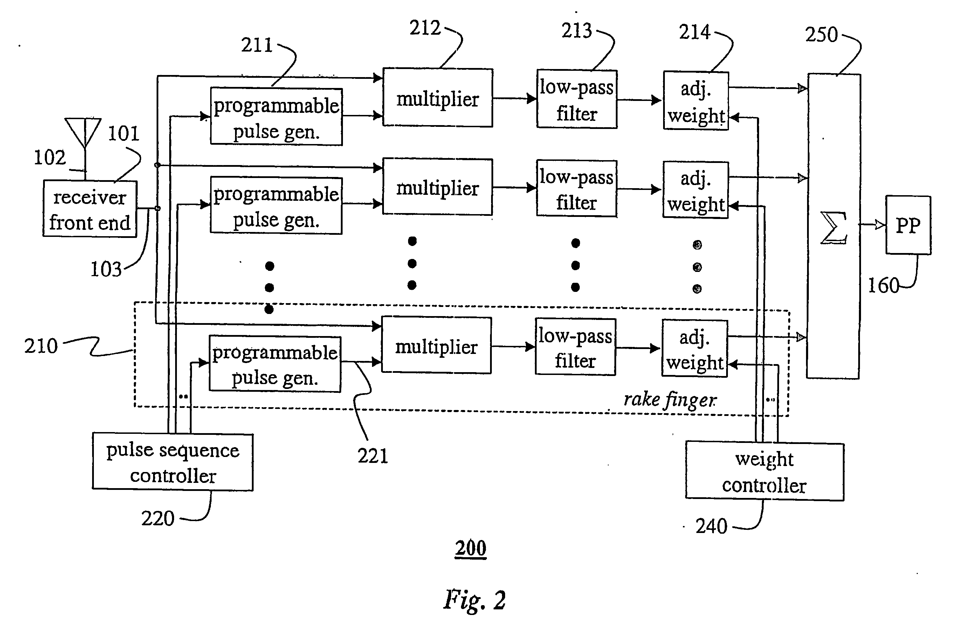

Figure 2 shows a rake receiver 200 for an ultra wide bandwidth communications system according to the invention. The receiver 200 includes a front end 101 for pre-processing a received radio signal 102. The front end converts the received signal 102 to an electrical signal 103 that is a complex signal including an in-phase component and a quadrature component. In one embodiment the electrical signal 103 is in digital form. In another embodiment, the received radio signal 102 is a real, baseband radio signal and is converted to real, electrical baseband signal.

The rake receiver 200 has a modular structure wherein the received radio signal 102 is processed in parallel through multiple channels known as "rake fingers" 210. Each rake finger 210 processes the signal that is received through one of the paths of propagation in a multi-path radio channel.

Accordingly, each finger includes a programmable pulse generator 211 controlled by a pulse sequence controller 220. A multiplier 212 takes as input the electrical signal 103 and the output of the programmable pulse generator 211. The output of the multiplier 212 is low-pass filtered 213. The low-pass filter generates an output proportional to a time integral of an input to the filter. The filter can be an integrate-and-dump filter.

Then, the signal is weighted 214 according to a weight controller 240 for signal gain to compensate for attenuation in the multi-path cannel. The outputs of the fingers 210 are then combined in a summing block 250 before post-processing (PP) 160. This method of weighting and combining multiple signals is known as "maximal-ratio" combining. Alternative methods for the choice of the finger weights include "equal gain" weight assignment, and "optimum" weight generation.

The difference between the rake receiver 200 according to the invention and the prior art rake receiver 100 is that the adjustable delay blocks 211 and the delay controller 120 have been eliminated, and the single de-spreading waveform generator 130 has been replaced by a plurality of programmable pulse generators 220, one for each rake finger 210.

These modifications are advantageous because the prior art adjustable delay blocks are difficult to implement for the ultra wideband signal, while the programmable pulse generators 211 are much easier to implement with integrated electronic circuits.

All of the programmable pulse generators 211 produce a pulse pattern 221. The pulse pattern is identical to a pulse pattern that is used in the transmitter to module data to be transmitted. However, the timings of the pulse patterns from the different pulse generators 211 are different. The pulse sequence controller 220 adjusts the timing of each pulse generator to match the delay of one path in the multi-path channel.

The rake receiver 200 according to the invention exploits the sparsity of the channel. The number of "significant" paths in the IEEE802.15.3a channel models, i.e., those channels that capture 85% of the energy, lies between 40 for the UWB indoor channel model 1 (CM1), and 160 for the UWB indoor channel model 4 (CM4 ). Thus, it is not necessary to A/D convert all of the approximately two thousand possible paths, i.e., pulses with 200 ns duration and an impulse response with 100 ps delay resolution.

After the channel is estimated, the most significant paths are identified. The number of fingers 210 is then reduced to match the number of the significant paths. Trading off performance for cost can use fewer fingers.

As described above, the pulse sequence controller 220 adjusts the timing out of each pulse generator 211 to match the delay of each significant path in the channel.

The performance of the modified rake receiver of Figure 2 is close to that of the prior-art rake receiver, as long as the symbol rate of the payload signal is small compared to the delay spread of the channel.

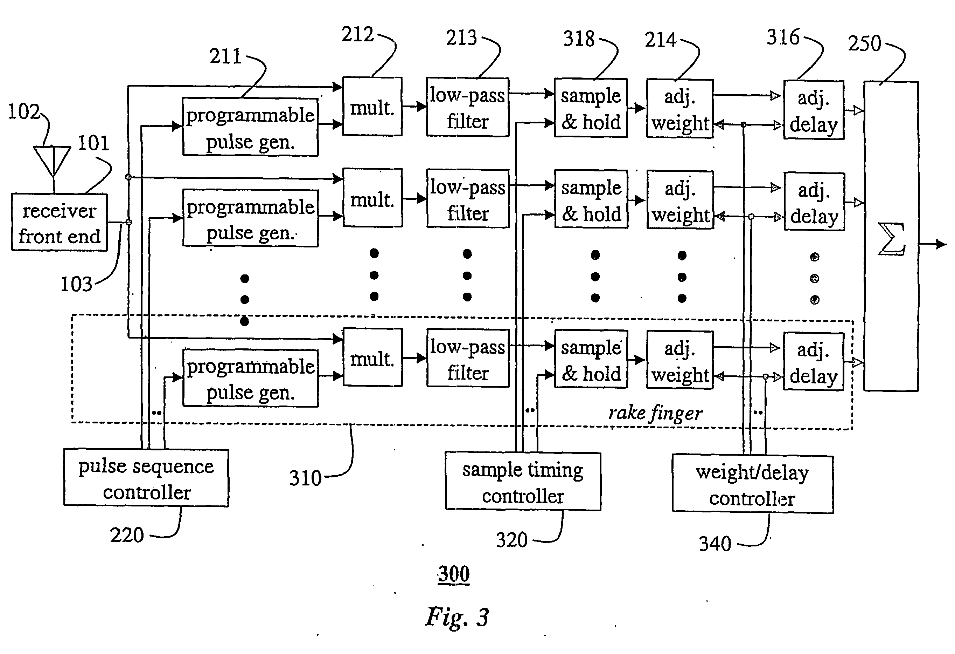

Figure 3 shows an alternative receiver 300 for situations where this symbol rate condition is not met. The performance for the receiver 300 is the same as for the prior-art rake receiver 100. The adjustable delay blocks that were removed from the receiver 200, are re-introduced as adjustable delay blocks 216 in each rake finger 310.

However, in this embodiment, the delay block 216 is arranged as the last functional block in the finger 310. This makes the delays much easier to implement because the signal bandwidth at this point is much narrower than before the low-pass filter 213. The blocks 216 are shown with a dashed outline to indicate that they are optional.

Each finger 310 also includes a sample-and-holdblock 318. Again, the dashed outline indicates that the blocks 318 are also optional. These blocks make it easier to implement the adjustable weight blocks 214 and the adjustable delay blocks 216 that follow in the finger. This is especially true when the sample-and-hold blocks 218 are implemented as A/D converters, so that all functions that follow can be implemented digitally. The adjustable weight and delay blocks are controlled by a weight and delay controller 340.

In this case, the sampling is at the symbol rate. The adjustable delay blocks 316 only need coarse adjustment, while fine timing adjustments are performed by a sample timing controller 320 through precise adjustments of the individual sampling times.

Other embodiments are also possible. In particular, the last four functional blocks 213, 214, 216, and 218 in each rake 310 can be connected serially in each finger in any arbitrary order without affecting the functionality of the receiver 300. Figure 3 shows the preferred order.

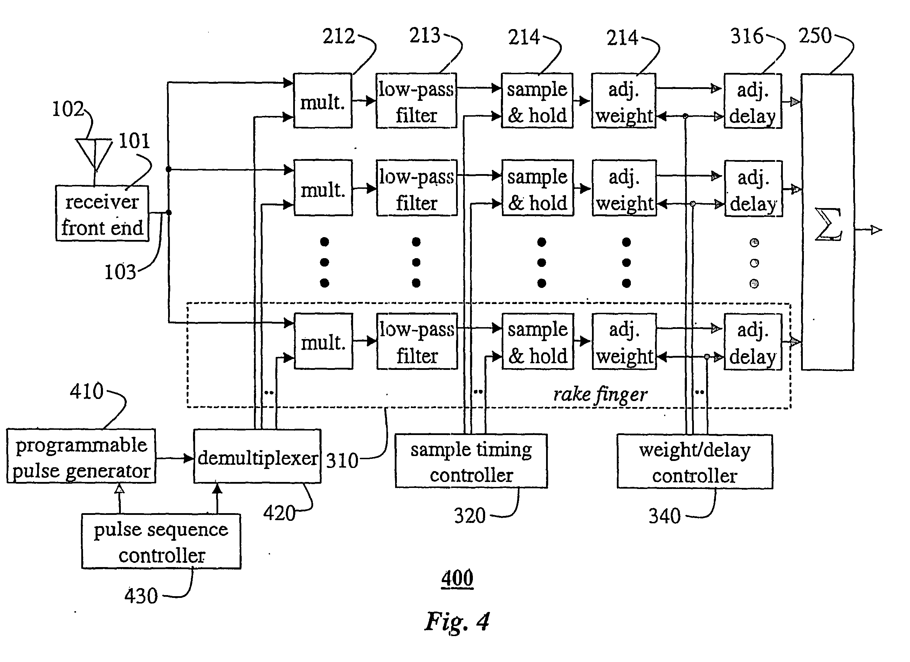

Figure 4 shows another alternative embodiment of a rake receiver 400. In the receiver 400, the individual programmable pulse generators 211 are replaced by a single pulse generator 410 followed by a demultiplexer 420, and a pulse sequence controller 430. This is advantageous in some applications where the multiple pulse generators 211 are difficult to implement, while the single pulse generator 410 and the demultiplexer 420 are relatively easy to implement.

The demultiplexer 420 operates as a switch to route the pulses from the pulse generator 410 to the various multipliers 212 according to a pattern defined by the pulse sequence controller 430. Concurrently, the controller 430 also controls the pattern of pulses generated by the programmable pulse generator 410, so as to achieve the desired patterns of pulses for the multipliers 212.

In the above description, all the rake fingers receive the same pulse pattern with different timings. However, the invention also allows the option of feeding different pulse patterns to different rake fingers. This can be particularly advantageous in situations with severe multi-path, where the harm of inter-symbol interference can be larger than the advantage of additional detected signal.

In general, the pulse sequence controller, sample timing controller and weight/delay controller work in concert to optimize the performance of the rake receiver for the available channel, while fully exploiting the flexibility afforded by our invention.

Although the invention has been described by way of examples of preferred embodiments, it is to be understood that various other adaptations and modifications can be made within the spirit and scope of the invention. Therefore, it is the object of the appended claims to cover all such variations and modifications as come within the true spirit and scope of the invention.

## Claims

1. An apparatus for detecting a transmitted ultra-wideband radio signal (102), comprising:
a front end (101) to convert a received version of the transmitted ultra-wideband radio signal into an electrical signal;
a plurality of rake fingers (210, 310), each rake finger to process the electrical signal in parallel, and each rake finger further comprising :
a programmable pulse generator (211) to generate a sequence of ultra-wideband pulses;
a multiplier (212) connected to an output of the front end and to an output of a programmable pulse generator to generate a signal functionally related to a product of the output of the front end and the output of the programmable pulse generator;
a low-pass filter (213) to filter an output of the multiplier;
an adjustable weight block (214) to scale an output of the low-pass filter;
a sample-and-hold block (318) connected between the low-pass filter (213) and the adjustable weight block (214), wherein the sample-and-hold block (318) is an analog-to-digital converter; the apparatus further comprising:
a pulse sequence controller (220) to adjust a timing of each sequence of ultra-wideband pulses from each programmable pulse generator in each rake finger;
a weight controller (240, 340) to adjust weights for each adjustable weight block in each rake finger;
a summing block (250) configured to combine an output of each rake finger to recover a signal corresponding to the transmitted ultra-wideband radio signal; and
in each rake finger an adjustable delay block (316) connected between the low-pass filter (213) of the rake finger and the summing block (250).

2. An apparatus for detecting a transmitted ultra-wideband radio signal, comprising:
a front end (101) to convert a received version of the transmitted ultra-wideband radio signal into an electrical signal;
a programmable pulse generator (410) to generate a sequence of ultra-wideband pulses;
a demultiplexer (420) connected to an output of the programmable pulse generator to generate a plurality of the sequence of ultra-wideband pulses;
a pulse sequence controller (430) to adjust a timing of each sequence of pulses;
a plurality of rake fingers (310), each rake finger to process the electrical signal in parallel, and each rake finger further comprising:
a multiplier (212) connected to an output of the front end and to an output of the demultiplexer to generate a signal functionally related to a product of the output of the front end and the output of the programmable pulse generator; a low-pass filter (213) to filter an output of the multiplier;
an adjustable weight block (214) to scale an output of the low-pass filter;
a sample-and-hold block (318) connected between the low-pass filter (213) and the adjustable weight block (214), wherein the sample-and-hold block (318) is an analog-to-digital converter; the apparatus further comprising:
a weight controller (340) to adjust weights for each adjustable weight block in each rake finger;
a summing block (250) configured to combine an output of each rake finger to recover a signal corresponding to the transmitted ultra-wideband radio signal; and
in each rake finger an adjustable delay block (316) connected between the low-pass filter (213) of the rake finger and the summing block (250).

3. The apparatus of claim 1 or claim 2 wherein a pattern of the sequence of pulses is identical to a pattern of pulses used to spread the transmitted signal in a transmitter.

4. The apparatus of claim 1 or claim 2 wherein the timing of each sequence of pulses match a delay of one path in a multi-path channel used to transmit the radio signal.

5. The apparatus of claim 1 or claim 2 wherein the low-pass filter (213) generates an output proportional to a time integral of an input to the low-pass filter.

6. The apparatus of claim 1 or claim 2 wherein the low-pass filter (213) is an integrate-and-dump filter.

7. The apparatus of claim 1 or claim 2 wherein the electrical signal is a complex signal consisting of an in-phase component and a quadrature component.

8. The apparatus of claim 4 wherein the electrical signal is in a form of a digital signal.

9. The apparatus of claim 1 or 2, wherein the adjustable delay block (316) is adapted to generate an output signal proportional to a delayed version of an input signal, with the delay value determined by a control input (340).

10. A method for detecting a transmitted ultra-wideband radio signal, comprising:
converting a received version of the transmitted ultra-wideband radio signal into an electrical signal;
processing the electrical signal in parallel in a plurality of rake fingers, the processing in each finger comprising the following six steps:
generating a sequence of ultra-wideband pulses with adjustable timing;
multiplying the sequence of ultra-wideband pulses with the electrical signal;
low-pass filtering a signal produced by the multiplying;
sampling the low-pass filtered signal;
scaling the sampled signal by an adjustable weight;
delaying the scaled signal and
summing the delayed signals of each finger to recover a signal corresponding to the transmitted ultra-wideband radio signal.

## Patentansprüche

1. Gerät zum Erfassen eines übertragenen Ultrabreitband-Funksignals (102), aufweisend:
ein vorderes Ende (101) zum Umwandeln einer empfangenen Version des übertragenen Ultrabreitband-Funksignals in ein elektrisches Signal; mehrere Rake-Finger (210, 310), wobei jeder Rake-Finger das elektrische Signal parallel verarbeitet und jeder Rake-Finger weiterhin aufweist:
einen programmierbaren Impulsgenerator (211) zum Erzeugen einer Folge von Ultrabreitbandimpulsen; eine Multiplikationsvorrichtung (212), die mit einem Ausgang des vorderen Endes und mit einem Ausgang eines programmierbaren Impulsgenerators verbunden ist, um ein Signal zu erzeugen, das funktionell auf ein Produkt aus dem Ausgangssignal des vorderen Endes und dem Ausgangssignal des programmierbaren Impulsgenerators bezogen ist;
ein Tiefpassfilter (213) zum Filtern eines Ausgangssignals der Multiplikationsvorrichtung; einen einstellbaren Gewichtsblock (214), um ein Ausgangssignal des Tiefpassfilters zu skalieren; einen Abtast-und-Halte-Block (318), der zwischen das Tiefpassfilter (213) und den einstellbaren Gewichtsblock (214) geschaltet ist, wobei der Abtast-und-Halte-Block (318) ein Analog/DigitalWandler ist;
welches Gerät weiterhin aufweist:
eine Impulsfolgen-Steuervorrichtung (220) zum Einstellen eines Zeitverhaltens jeder Folge von Ultrabreitbandimpulsen von jedem programmierbaren Impulsgenerator in jedem Rake-Finger;
eine Gewichtssteuervorrichtung (240, 340) zum Einstellen der Gewichte für jeden einstellbaren Gewichtsblock in jedem Rake-Finger;
einen Summierungsblock (250), der ausgebildet ist zum Kombinieren eines Ausgangssignals jedes Rake-Fingers zur Wiederherstellung eines Signals entsprechend des übertragenen Ultrabreitband-Funksignals; und
in jedem Rake-Finger einen einstellbaren Verzögerungsblock (316), der zwischen das Tiefpassfilter (213) des Rake-Fingers und den Summierungsblock (250) geschaltet ist.

2. Gerät zum Erfassen eines übertragenen Ultrabreitband-Funksignals, aufweisend:
ein vorderes Ende (101) zum Umwandeln einer empfangenen Version des übertragenen Ultrabreitband-Funksignals in ein elektrisches Signal; einen programmierbaren Impulsgenerator (410) zum Erzeugen einer Folge von Ultrabreitbandimpulsen; einen Demultiplexierer (420), der mit einem Ausgang des programmierbaren Impulsgenerators verbunden ist, um mehrere der Folge von Ultrabreitbandimpulsen zu erzeugen;
eine Impulsfolgen-Steuervorrichtung (430) zum Einstellen eines Zeitverhaltens jeder Folge von Impulsen;
mehrere Rake-Finger (310), wobei jeder Rake-Finger für die parallele Verarbeitung des elektrischen Signals vorgesehen ist und jeder Rake-Finger weiterhin aufweist:
eine Multiplikationsvorrichtung (212), die mit einem Ausgang des vorderen Endes und mit einem Ausgang des Demultiplexierers verbunden ist, um ein Signal zu erzeugen, das funktionell auf ein Produkt aus dem Ausgangssignal des vorderen Endes und dem Ausgangssignal des programmierbaren Impulsgenerators bezogen ist;
ein Tiefpassfilter (213) zum Filtern eines Ausgangssignals der Multiplikationsvorrichtung; einen einstellbaren Gewichtsblock (214), um ein Ausgangssignal des Tiefpassfilters zu skalieren; einen Abtast-und-Halte-Block (318), der zwischen das Tiefpassfilter (213) und den einstellbaren Gewichtsblock (214) geschaltet ist, wobei der Abtast-und-Halte-Block (318) ein Analog/DigitalWandler ist;
welches Gerät weiterhin aufweist:
eine Gewichtssteuervorrichtung (340) zum Einstellen der Gewichte für jeden einstellbaren Gewichtsblock in jedem Rake-Finger;
einen Summierungsblock (250), der ausgebildet ist zum Kombinieren eines Ausgangssignals jedes Rake-Fingers zur Wiederherstellung eines Signals entsprechend des übertragenen Ultrabreitband-Funksignals; und
in jedem Rake-Finger einen einstellbaren Verzögerungsblock (316), der zwischen das Tiefpassfilter (213) des Rake-Fingers und den Summierungsblock (250) geschaltet ist.

3. Gerät nach Anspruch 1 oder Anspruch 2, bei dem ein Muster der Folge von Impulsen identisch mit einem Muster von Impulsen ist, das zum Spreizen des übertragenen Signals in einem Sender verwendet wird.

4. Gerät nach Anspruch 1 oder Anspruch 2, bei dem das Zeitverhalten jeder Folge von Impulsen mit einer Verzögerung eines Pfades in einem Mehrpfadkanal, der zum Übertragen des Funksignals verwendet wird, übereinstimmt.

5. Gerät nach Anspruch 1 oder Anspruch 2, bei dem das Tiefpassfilter (213) ein Ausgangssignal erzeugt, das proportional einem Zeitintegral eines Eingangssignals des Tiefpassfilters ist.

6. Gerät nach Anspruch 1 oder Anspruch 2, bei dem das Tiefpassfilter (213) ein Integrations-und-Dumpfilter ist.

7. Gerät nach Anspruch 1 oder Anspruch 2, bei dem das elektrische Signal ein komplexes Signal ist, das aus einer gleichphasigen Komponente und einer 90-Grad-Komponente besteht.

8. Gerät nach Anspruch 4, bei dem das elektrische Signal in einer Form eines digitalen Signals ist.

9. Gerät nach Anspruch 1 oder Anspruch 2, bei dem der einstellbare Verzögerungsblock (316) ausgebildet ist zum Erzeugen eines Ausgangssignals, das proportional einer verzögerten Version eines Eingangssignals ist, wobei der Verzögerungswert durch ein Steuereingangssignal (340) bestimmt ist.

10. Verfahren zum Erfassen eines übertragenen Ultrabreitband-Funksignals, aufweisend:
Umwandeln einer empfangenen Version des übertragenen Ultrabreitband-Funksignals in ein elektrisches Signal;
paralleles Verarbeiten des elektrischen Signals in mehreren Rake-Fingern, wobei das Verarbeiten in jedem Finger die folgenden sechs Schritte aufweist:
Erzeugen einer Folge von Ultrabreitbandimpulsen mit einstellbarem Zeitverhalten;
Multiplizieren der Folge von Ultrabreitbandimpulsen mit dem elektrischen Signal; Tiefpassfiltern eines durch das Multiplizieren erzeugten Signals;
Abtasten des tiefpassgefilterten Signals; Skalieren des abgetasteten Signals durch ein einstellbares Gewicht;
Verzögern des skalierten Signals und
Summieren der verzögerten Signale jedes Fingers, um ein Signal entsprechend des übertragenen Ultrabreitband-Funksignals wieder herzustellen.

## Revendications

1. Appareil destiné à détecter un signal radio émis à bande ultralarge (102), comprenant :
un étage d'entrée (101) destiné à convertir une version reçue du signal radio émis à bande ultralarge en un signal électrique ;
une pluralité de doigts de râteau (210, 310), chaque doigt de râteau étant destiné à traiter en parallèle le signal électrique, et chaque doigt de râteau comprenant en outre :
un générateur d'impulsions programmable (211) destiné à générer une séquence d'impulsions à bande ultralarge ;
un multiplicateur (212) connecté à une sortie de l'étage d'entrée et à une sortie d'un générateur d'impulsions programmable de manière à générer un signal associé de manière fonctionnelle au produit de la sortie de l'étage d'entrée par la sortie du générateur d'impulsions programmable ;
un filtre passe-bas (213) destiné à filtrer la sortie du multiplicateur ;
un bloc de pondération réglable (214) destiné à pondérer la sortie du filtre passe-bas ;
un bloc d'échantillonnage - blocage (318) connecté entre le filtre passe-bas (213) et le bloc de pondération réglable (214), dans lequel le bloc d'échantillonnage - blocage (318) est un convertisseur analogique - numérique ; l'appareil comprenant en outre :
un contrôleur de séquence d'impulsions (220) destiné à régler la synchronisation de chaque séquence d'impulsions à bande ultralarge de chaque générateur d'impulsions programmable dans chaque doigt de râteau ;
un contrôleur de pondération (240, 340) destiné à régler les poids de chaque bloc de pondération réglable dans chaque doigt de râteau ;
un bloc de sommation (250) configuré de manière à combiner une sortie de chaque doigt de râteau de façon à récupérer un signal qui correspond au signal radio émis à bande ultralarge ; et
dans chaque doigt de râteau, un bloc de retard réglable (316) connecté entre le filtre passe-bas (213) du doigt de râteau et le bloc de sommation (250).

2. Appareil destiné à détecter un signal radio émis à bande ultralarge, comprenant :
un étage d'entrée (101) destiné à convertir une version reçue du signal radio émis à bande ultralarge en un signal électrique ;
un générateur d'impulsions programmable (410) destiné à générer une séquence d'impulsions à bande ultralarge ;
un démultiplexeur (420) connecté à une sortie du générateur d'impulsions programmable destiné à générer une pluralité de séquences d'impulsions à bande ultralarge ;
un contrôleur de séquence d'impulsions (430) destiné à régler la synchronisation de chaque séquence d'impulsions ;
une pluralité de doigts de râteau (310), chaque doigt de râteau étant destiné à traiter en parallèle le signal électrique, et chaque doigt de râteau comprenant en outre :
un multiplicateur (212) connecté à une sortie de l'étage d'entrée et à une sortie du démultiplexeur de manière à générer un signal associé de manière fonctionnelle à un produit de la sortie de l'étage d'entrée par la sortie du générateur d'impulsions programmable ;
un filtre passe-bas (213) destiné à filtrer la sortie du multiplicateur ;
un bloc de pondération réglable (214) destiné à pondérer la sortie du filtre passe-bas ;
un bloc d'échantillonnage - blocage (318) connecté entre le filtre passe-bas (213) et le bloc de pondération réglable (214), dans lequel le bloc d'échantillonnage - blocage (318) est un convertisseur analogique - numérique ; l'appareil comprenant en outre :
un contrôleur de pondération (340) destiné à régler les poids de chaque bloc de pondération réglable dans chaque doigt de râteau ;
un bloc de sommation (250) configuré de manière à combiner une sortie de chaque doigt de râteau de façon à récupérer un signal qui correspond au signal radio émis à bande ultralarge ; et
dans chaque doigt de râteau, un bloc de retard réglable (316) connecté entre le filtre passe-bas (213) du doigt de râteau et le bloc de sommation (250).

3. Appareil selon la revendication 1 ou la revendication 2, dans lequel un motif de la séquence d'impulsions est identique à un motif d'impulsions utilisé de manière à étaler le signal émis dans un émetteur.

4. Appareil selon la revendication 1 ou la revendication 2, dans lequel la synchronisation de chaque séquence d'impulsions correspond à un retard d'un trajet dans un canal à propagation par trajets multiples utilisé pour émettre le signal radio.

5. Appareil selon la revendication 1 ou la revendication 2, dans lequel le filtre passe-bas (213) génère une sortie proportionnelle à une intégrale par rapport au temps d'une entrée du filtre passe-bas.

6. Appareil selon la revendication 1 ou la revendication 2, dans lequel le filtre passe-bas (213) est un filtre à intégration et vidage.

7. Appareil selon la revendication 1 ou la revendication 2, dans lequel le signal électrique est un signal complexe qui se compose d'une composante en phase et d'une composante en quadrature.

8. Appareil selon la revendication 4, dans lequel le signal électrique se présente sous la forme d'un signal numérique.

9. Appareil selon la revendication 1 ou la revendication 2, dans lequel le bloc de retard réglable (316) est adapté de manière à générer un signal de sortie proportionnel à une version retardée d'un signal d'entrée, la valeur du retard étant déterminée par une entrée de commande (340).

10. Procédé destiné à détecter un signal radio émis à bande ultralarge, comprenant les étapes consistant à :
convertir une version reçue du signal radio émis à bande ultralarge en un signal électrique ;
traiter en parallèle le signal électrique dans une pluralité de doigts de râteau, le traitement dans chaque doigt comprenant les sept étapes suivantes consistant à :
générer une séquence d'impulsions à bande ultralarge avec une synchronisation réglable ;
multiplier la séquence d'impulsions à bande ultralarge par le signal électrique ;
filtrer à l'aide d'un filtre passe-bas le signal produit par la multiplication ;
échantillonner le signal filtré par le filtre passe-bas ;
pondérer le signal échantillonné avec un poids réglable ;
retarder le signal pondéré, et
sommer les signaux retardés de chaque doigt de manière à récupérer un signal qui correspond au signal radio émis à bande ultralarge.
